Europäisches Patentamt

European Patent Office

Office européen des brevets

(19)

(11) **EP 1 630 973 A2**

(12) **EUROPEAN PATENT APPLICATION**

(43) Date of publication:
**01.03.2006 Bulletin 2006/09**

(51) Int Cl.:
**H04B 7/005** (2006.01)

(21) Application number: **05107650.3**

(22) Date of filing: **19.08.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **31.08.2004 CN 200410075376**

(71) Applicant: **SIEMENS AKTIENGESELLSCHAFT
80333 München (DE)**

(72) Inventors:
• **Huang, HaoXue
100102 Beijing (CN)**
• **Xiao, Lei
100102 Beijing (CN)**

(54) **Method for revising user equipment measurement report in time division - synchronous code division multiple access system**

(57) It is proposed in this invention a method for revising user equipment measurement report in a time division - synchronous code division multiple access system. In said user equipment's each measurement report cycle, firstly, starting from the moment that said user equipment transmits a measurement report till the moment that the measurement report by said user equipment is received, said node B counts the accumulative total of closed loop control commands in the uplink closed loop control cycles during that period, and adds the accumulation result of said control commands to said received measurement report; then in each uplink closed loop control cycle following the reception of said measurement report said node B accumulates, one by one, each closed loop control command onto said addition result, until it receives the measurement report in next measurement report cycle, so as to improve the user equipment measurement report's real time quality and to increase the user equipment measurement report's accuracy.

**Description**

Technical Field

This invention relates to a method for processing digital signals, and more particularly, to a method for revising user equipment measurement report in a time division - synchronous code division multiple access system, so as to increase the user equipment measurement report's accuracy.

Technical Background

In a time division - synchronous code division multiple access system (TD-SCDMA), physical layer measurement is a key technology used in the physical layer (or layer 1) to trigger or to assist the completion of certain system functions. The physical layer measurement can be divided into user equipment side measurement and network side measurement, which include intra-frequency measurement, inter-frequency measurement, inter-system measurement, traffic volume measurement, traffic quality measurement, and internal measurement. In the user equipment side measurement, the measurement quantities include: main common control physical channel's received signal code power (P-CCPCH RSCP), interference signal code power (Timeslot ISCP), received carrier signal broadband power (UTRA carrier RSSI), signal interference ratio (SIR), user equipment's transmitted power and timing advance, etc. In the network side measurement, the measurement quantities include: received signal code power (RSCP), interference signal code power (Timeslot ISCP), received signal total broadband power, signal interference ratio (SIR), transport channel bit error rate, received SYNC-UL timing deviation, etc. Physical layer measurement is initiated and controlled by higher layers, and measurement reports are sent by the physical layer to the higher layers periodically or in an event-triggered manner. Reference is made to the standard specifications for time division - synchronous code division multiple access system, 3GPP TS 25.225 V6.1.0, TS 25.302 V6.1.0 and TS 25.331 V6.2.0, which can be downloaded from 3GPP website www. 3gpp.org.

In the user equipment side measurement, the user equipment's transmitted power and timing advance have very important effects in uplink closed loop power control process and uplink closed loop synchronisation control process respectively. In an uplink closed loop power control process, after having received the user equipment's uplink signals the node B measures or calculates the following values first, in which n represents the serial number of the current uplink closed loop power control cycle:

a. correlation factor $\rho_p$ of a wireless channel's transmitting characteristics between a current uplink closed loop power control cycle and a previous uplink closed loop power control cycle,

$$\rho_p = \frac{E\left\{\left[h^{\cdot}(n) - E\left[h^{\cdot}(n)\right]\right]\left[h^{\cdot}(n-1) - E\left[h^{\cdot}(n-1)\right]\right]\right\}}{\sqrt{D\left[h^{\cdot}(n)\right]} \cdot \sqrt{D\left[h^{\cdot}(n-1)\right]}}$$

b. signal to noise ratio of the uplink received signal in the current uplink closed loop power control cycle $\hat{snr}(n)$

c. average signal to noise ratio of said uplink received signal $\overline{SNR}$ .

Then, said node B uses the above results to calculate a monitored signal to noise ratio $snr(n)$,

$$snr(n) = \left[\hat{snr}(n) - \overline{SNR}\right]\rho_p + \overline{SNR} \; ;$$

and the monitored signal to noise ratio obtained in this way is compared with a target signal to noise ratio to generate an uplink power control command. When said monitored signal to noise ratio is above the set target signal to noise ratio, the node B generates an uplink power control command "reducing", thus to control said user equipment to reduce its uplink signal's transmitted power, and when said monitored signal to noise ratio is below or equal to the set target signal to noise ratio, the node B generates an uplink power control command "increasing", thus to control said user equipment to increase its uplink signal's transmitted power. In each uplink closed loop power control cycle, said uplink signal's one uplink power control increment can be set to 1dB, 2dB or 3dB. Said target signal to noise ratio can be dynamically set by higher layers according to transport operation's quality requirements or by way of outer loop control. When calculating said correlation factor $\rho_p$, the random variable's expectation and variance are approximated by the random variable's time average. For example, a sliding average is made to the random variable in 15 consecutive uplink closed loop power control cycles, and said 15 consecutive uplink closed loop power control cycles include the current uplink closed loop power control cycle and 14 previous uplink closed loop power control cycles;

$$\dot{h}(n) = \frac{h(n)}{x(n)} \ , \ \dot{h}(n-1) = \frac{h(n-1)}{x(n-1)} \ ,$$

wherein h(n) and *h(n-1)* represent respectively the wireless channel's transmitting characteristics in the current uplink closed loop power control cycle and the previous uplink closed loop power control cycle, including the wireless channel's pathloss, slow fading and fast fading characteristics; x(n) and *x(n-1)* represent respectively the noise power in the current uplink closed loop power control cycle and the previous uplink closed loop power control cycle, said noise includes additive white Gaussian noise and interference between cells and within a cell; said uplink received signal's signal to noise ratio $\hat{snr}(n)$ is the ratio of the uplink signal's received power to the noise power in the current uplink closed loop power control cycle, the uplink received signal's average signal to noise ratio $\overline{SNR}$ is the sliding time average of said uplink received signal's signal to noise ratio in 15 consecutive uplink closed loop power control cycles, and said 15 consecutive uplink closed loop power control cycles include the current uplink closed loop power control cycle and 14 previous uplink closed loop power control cycles. The window length for said sliding average can be adjusted in real time according to prior knowledge or predication of the channel's transmitting characteristics. In order to obtain the wireless channel's transmitting characteristics h(n) in the current uplink closed loop power control cycle, said node B makes a comparison between the measured value of said uplink signal's received power with said uplink signal's transmitted power $P_t(n)$ in said user equipment periodic report, namely

$$h(n) = \frac{P_r(n)}{P_t(n)} \ .$$

In an uplink closed loop synchronisation control process, after having received the user equipment's uplink signal, the node B first measures or calculates the following values, in which n represents the serial number of the current uplink closed loop synchronisation control cycle:

a. correlation factor $\rho_t$ of the wireless channel's transmitting characteristics between a current uplink closed loop synchronisation control cycle and a previous uplink closed loop synchronisation control cycle,

$$\rho_t = \frac{E\{[h_t(n) - E[h_t(n)]][h_t(n-1) - E[h_t(n-1)]]\}}{\sqrt{D[h_t(n)]} \cdot \sqrt{D[h_t(n-1)]}} \ ;$$

b. the average maximum peak value position of said wireless channel's impulse response $\overline{H}_p$.

Then, said node B uses the above results to calculate a monitored position $\hat{h}_p(n)$,

$$\hat{h}_p(n) = \left[h_p(n) - \overline{H}_p\right]\rho_t + \overline{H}_p \ .$$

The monitored position obtained in this way is compared with a set target position, so as to generate a synchronisation adjustment command. When said monitored position is ahead the set target position, said node B generates a synchronisation adjustment command "reducing", to control said user equipment to reduce the uplink signal's transmitting timing advance; when said monitored position is behind the set target position, said node B generates a synchronisation adjustment command "increasing", to control said user equipment to increase the uplink signal's transmitting timing advance; and when said monitored position equals the set target position, said node B generates a synchronisation adjustment command "no change", to control said user equipment to maintain the uplink signal's transmitting timing advance unchanged. In each uplink closed loop synchronisation control cycle, the synchronisation adjustment increment of said transmitting timing advance can be set to 1/8, 2/8, ... or 1 chip. When calculating said correlation factor $\rho_t$, the random variable's expectation and variance are approximated by the random variable's time average. For example, a sliding average is made to the random variable in 15 consecutive uplink closed loop synchronisation control cycles, and said 15 consecutive uplink closed loop synchronisation control cycles include the current uplink closed loop synchronisation control cycle and 14 previous uplink closed loop synchronisation control cycles;

$$h_r(n) = \frac{h_p(n) + x_{TA}(n) - T_{pos}}{2} \quad , \quad h_r(n-1) = \frac{h_p(n-1) + x_{TA}(n-1) - T_{pos}}{2} \quad ,$$

wherein $h_p(n)$ and $h_p(n\text{-}1)$ represent respectively the maximum peak position of the wireless channel's impulse response in the current uplink closed loop synchronisation control cycle and the previous uplink closed loop synchronisation control cycle; $x_{TA}(n)$ and $x_{TA}(n\text{-}1)$ represent respectively the uplink signal's transmitting advance in the current uplink closed loop synchronisation control cycle and the previous uplink closed loop synchronisation control cycle; and $T_{pos}$ represents the target position set by the node B. Said average maximum peak value position $\overline{H_p}$ of said wireless channel's impulse response is the sliding time average of the maximum peak value position of said wireless channel's impulse response in 15 consecutive uplink closed loop synchronisation control cycles, and said 15 consecutive uplink closed loop synchronisation control cycles include the current uplink closed loop synchronisation control cycle and 14 previous uplink closed loop synchronisation control cycles. Said wireless channel's impulse response is measured by using the midamble part of said uplink received signal. The window length for said sliding average can be adjusted in real time according to prior knowledge or predication of the channel's transmitting characteristics. In order to obtain the uplink transmitted signal's timing advance $X_{TA}(n)$ in the current uplink closed loop synchronisation control cycle, said node B can obtain the same from the timing advance measurement report transmitted periodically by said user equipment.

The measurement report on user equipment transmitted power and timing advance is reported periodically to the network side by the user equipment. The report's cycle can be selected from 250ms, 500ms, 1000ms, 2000ms, 3000ms, 4000ms, 6000ms, 8000ms, 12000ms, 16000ms, 20000ms, 24000ms, 28000ms, 32000ms or 64000ms. The network side transmits a report cycle set by itself to the user equipment via a measurement control message. In the above uplink closed loop power control process and uplink closed loop synchronisation control process, the frequency for the uplink closed loop power control can be selected from 0 ~ 200 times/second, and the frequency for the uplink closed loop synchronisation control can be selected from 25 ~ 200 times/second. When the frequency for uplink closed loop power control and that for uplink closed loop synchronisation control are both set to 200 times/second, i.e. the uplink closed loop power control cycle and the uplink closed loop synchronisation control cycle are both set to the minimum value of 5ms (please refer to the standard specifications for time division - synchronous code division multiple access system, 3GPP TS 25.224 V6.1.0 and TS 25.331 V6.2.0), and when they are compared with the minimum value of 250ms for the report cycle, it can be seen that the minimum report cycle is 50 times of the minimum uplink closed loop power control and synchronisation control cycle. When calculating said wireless channel's transmitting characteristics $h(n)$ and timing advance $x_{TA}(n)$, the utilization of the periodical measurement report on the user equipment transmitted power and timing advance by the node B would be far from adequate to said cycle for uplink closed loop power control and uplink closed loop synchronisation control; namely, in each uplink closed loop power control cycle and uplink closed loop synchronisation control cycle, the node B cannot obtain from said user equipment measurement report said user equipment's transmitted power and timing advance in real time. Therefore, when the wireless channel's transmitting characteristics are changing very fast, the calculated results of the correlation factors $\rho_p$ and $\rho_t$ of the wireless channel's transmitting characteristics would not be able to accurately represent the real time changes of the wireless channel's transmitting characteristics, so it would reduce the self-adapting and self-adjusting capability of said uplink closed loop power control process and uplink closed loop synchronisation control process.

Summary of Invention

An object of the present invention is aimed at the problem that in the above mentioned time division - synchronous code division multiple access system, said report cycle for the user equipment to make measurement according to a measurement control message is relatively long, while the uplink closed loop power control cycle and uplink closed loop synchronisation control cycle are relatively short, so the real time quality of said user equipment measurement report cannot meet the requirements for the calculations in the uplink closed loop power control and uplink closed loop synchronisation control, therefore it is proposed a method for revising user equipment measurement report in a time division - synchronous code division multiple access system, so as to improve the real time quality of the user equipment measurement report and to increase the accuracy of the user equipment measurement report.

The above inventive object is realized in the present invention as follows: a method for revising user equipment measurement report in a time division - synchronous code division multiple access system, wherein, in a cell within said system one user equipment's uplink signal transmitting parameters are controlled by the cell node B by an uplink closed loop control process; said user equipment performs measurements to said transmitting parameters according to a measurement control message and transmits periodically measurement reports to the network side; characterised in that: in said user equipment's each measurement report cycle, firstly, starting from the moment that said user equipment transmits a measurement report till the moment that the measurement report by said user equipment is received, said node B counts the accumulative total of closed loop control commands in the uplink closed loop control cycles during that period, and adds the accumulation result of said control commands to said received measurement report; then in each uplink closed loop control cycle following the reception of said measurement report said node B accumulates, one by one, each closed loop control command onto said addition result, until it receives said measurement report in next measurement report cycle.

According to one aspect of the present invention, said user equipment uplink signal's transmitted power is controlled by said node B by an uplink closed loop power control process, said user equipment measures its transmitted power according to a measurement control message and transmits periodically user equipment transmitted power measurement reports to the network side; in said user equipment's each measurement report cycle, firstly, starting from the moment that said user equipment transmits a measurement report till the moment that the measurement report by said user equipment is received, said node B counts the accumulative total of uplink power control commands in the uplink closed loop power control cycles during that period, and adds the accumulation result of said uplink power control commands to said received measurement report; then in each uplink closed loop power control cycle following the reception of said measurement report said node B accumulates, one by one, each uplink power control command onto said addition result, until it receives said measurement report in next measurement report cycle.

According to another aspect of the present invention, said user equipment uplink signal's transmitting time is controlled by said node B by an uplink closed loop synchronisation control process, said user equipment measures its transmitting time according to a measurement control message and transmits periodically timing advance measurement reports to the network side; in said user equipment's each measurement report cycle, firstly, starting from the moment that said user equipment transmits a measurement report till the moment that the measurement report by said user equipment is received, said node B counts the accumulative total of synchronisation adjustment commands in the uplink closed loop synchronisation control cycles during that period, and adds the accumulation result of said synchronisation adjustment commands to said received measurement report; then in each uplink closed loop synchronisation control cycle following the reception of said measurement report said node B accumulates, one by one, each synchronisation adjustment command onto said addition result, until it receives said measurement report in next measurement report cycle.

According to yet another aspect of the present invention, the timing for said user equipment to transmit said measurement report is decided by negotiation between said user equipment and said node B.

Embodiments

The method of the present invention is applied in the uplink closed loop power control process and the uplink closed loop synchronisation control process in said time division - synchronous code division multiple access system.

In the uplink closed loop power control process of said time division - synchronous code division multiple access system, after having received the user equipment's uplink signals the node B measures or calculates the following values first, in which n represents the serial number of the current uplink closed loop power control cycle:

a. correlation factor $\rho_p$ of a wireless channel's transmitting characteristics between a current uplink closed loop power control cycle and a previous uplink closed loop power control cycle,

$$\rho_p = \frac{E\left\{\left[h'(n) - E\left[h'(n)\right]\right]\left[h'(n-1) - E\left[h'(n-1)\right]\right]\right\}}{\sqrt{D\left[h'(n)\right]} \cdot \sqrt{D\left[h'(n-1)\right]}}$$

b. signal to noise ratio of the uplink received signal in the current uplink closed loop power control cycle $\hat{snr}(n)$

c. average signal to noise ratio of said uplink received signal $\overline{SNR}$.

Then, said node B uses the above results to calculate a monitored signal to noise ratio *snr (n),*

$$snr(n) = \left[\hat{snr}(n) - \overline{SNR}\right]\rho_p + \overline{SNR} \; ;$$

then the monitored signal to noise ratio obtained in this way is compared with a target signal to noise ratio to generate an uplink power control command;

$$h'(n) = \frac{h(n)}{x(n)} \;,\; h'(n-1) = \frac{h(n-1)}{x(n-1)} \;,$$

wherein h(n) and *h(n-1)* represent respectively the wireless channel's transmitting characteristics in the current uplink closed loop power control cycle and the previous uplink closed loop power control cycle, x(n) and x(n-1) represent respectively the noise power in the current uplink closed loop power control cycle and the previous uplink closed loop power control cycle. In order to obtain the wireless channel's transmitting characteristics h(n) in the current uplink closed loop power control cycle, said node B uses its measured value of said uplink signal's received power to compare with $P_t(n)$ in said user equipment's transmitted power measurement report after it having been revised by the method according to the present invention, namely

$$h(n) = \frac{P_r(n)}{P_t(n)} \;.$$

According to the present invention, the method for revising said user equipment transmitted power measurement report by said node B includes: said user equipment measures its transmitted power according to a measurement control message, the measurement report cycle is 250ms, i.e. fifty sub-frames; the transmitted power of said user equipment's uplink signal is controlled by said node B by an uplink closed loop power control process, and the uplink closed loop power control cycle is 5ms, i.e. one sub-frame. Said user equipment transmits said measurement report at frame number I, $I \geq 1$, said node B receives said measurement report at frame number I+A, 0<A<50. Firstly, said node B counts the accumulative total of the uplink power control commands in A uplink closed loop power control cycles during said period, and the accumulated result of said uplink power control commands is added to its received measurement report. Then, in the sub-frames I+A+1, I+A+2, ... following the reception of said measurement report, said node B accumulates, one by one, the uplink power control command in each uplink closed loop power control cycle onto said addition result, until it receives next measurement report in frame *I+A+50.*

In the uplink closed loop synchronisation control process of said time division - synchronous code division multiple access system, similarly, according to the present invention, the method for revising said user equipment's timing advance by said node B includes: said user equipment measures its transmitting time advance according to a measurement control message, the measurement report cycle is 250ms, i.e. fifty sub-frames; the timing advance of said user equipment's uplink signal is controlled by said node B by an uplink closed loop synchronisation control process, and the uplink closed loop synchronisation control cycle is 5ms, i.e. one sub-frame. Said user equipment transmits said measurement report at frame number I, $I \geq 1$, said node B receives said measurement report at frame number I+A, 0<A<50. Firstly, said node B counts the accumulative total of uplink synchronisation adjustment commands in A uplink closed loop synchronisation control cycles during that period, and the accumulated result of said uplink synchronisation adjustment commands is added to its received measurement report. Then, in the sub-frames I+A+1, I+A+2, ... following the reception of said measurement report, said node B accumulates, one by one, the synchronisation adjustment command in each uplink closed loop synchronisation control cycle onto said addition result, until it receives next measurement report in frame *I+A+50*.

When said node B revises the measurement reports of said user equipment's transmitted power and timing advance, the timing for said user equipment to transmit said measurement report is decided by negotiation between said user equipment and said node B via a shake-hands message.

It can be seen in the above embodiments that by way of the method of the present invention, in said user equipment's each measurement report cycle, said node B revises the measurement reports of said user equipment's transmitted power and timing advance, which would reduce the influence to said node B in obtaining in real time said user equipment's transmitted power and timing advance, because of the delay by the transmitting time of said measurement report. At the same time, considerations are made to the control effects to said user equipment's transmitted power by said uplink closed loop power control, and to said timing advance by said uplink closed loop synchronisation control, thereby to increase said user equipment measurement report's accuracy.

**Claims**

1. A method for revising user equipment measurement report in a time division - synchronous code division multiple access system, wherein, in a cell within said system one user equipment's uplink signal transmitting parameters are controlled by the cell node B by an uplink closed loop control process; said user equipment performs measurements to said transmitting parameters according to a measurement control message and transmits periodically measurement reports to network side; **characterised in that**: in said user equipment's each measurement report cycle, firstly, starting from the moment that said user equipment transmits a measurement report till the moment that the measurement report from said user equipment is received, said node B counts the accumulative total of closed loop control commands in the uplink closed loop control cycles during that period, and adds the accumulation result of said control commands to said received measurement report; then in each uplink closed loop control cycle following the reception of said measurement report said node B accumulates, one by one, each closed loop control command onto said addition result, until it receives said measurement report in next measurement report cycle.

2. A method according to claim 1, **characterised in that**: said user equipment uplink signal's transmitted power is controlled by said node B by an uplink closed loop power control process, said user equipment measures its transmitted power according to a measurement control message and transmits periodically user equipment transmitted power measurement reports to network side; in said user equipment's each measurement report cycle, firstly, starting from the moment that said user equipment transmits a measurement report till the moment that the measurement report by said user equipment is received, said node B counts the accumulative total of uplink power control commands in uplink closed loop power control cycles during that period, and adds the accumulation result of said uplink power control commands to said received measurement report; then in each uplink closed loop power control cycle following the reception of said measurement report said node B accumulates, one by one, each uplink power control command onto said addition result, until it receives said measurement report in next measurement report cycle.

3. A method according to claim 1, **characterised in that**: said user equipment uplink signal's transmitting time is controlled by said node B by an uplink closed loop synchronisation control process, said user equipment measures its transmitting time according to a measurement control message and transmits periodically timing advance measurement reports to network side; in said user equipment's each measurement report cycle, firstly, starting from the moment that said user equipment transmits a measurement report till the moment that the measurement report by said user equipment is received, said node B counts the accumulative total of synchronisation adjustment commands in uplink closed loop synchronisation control cycles during that period, and adds the accumulation result of said synchronisation adjustment commands to said received measurement report; then in each uplink closed loop synchronisation control cycle following the reception of said measurement report said node B accumulates, one by one, each synchronisation adjustment command onto said addition result, until it receives said measurement report in next measurement report cycle.

4. A method according to claim 1, **characterised in that** the timing for said user equipment to transmit said measurement report is decided by negotiation between said user equipment and said node B.

5. A node B of a time division - synchronous code division multiple access system, comprising means for carrying out the method according to claim 1.

6. A time division - synchronous code division multiple access system, comprising at least one node B and at least one user equipment, wherein the at least one node B and the at least one user equipment are enabled to carry out the method according to claim 1.